# EUROPÄISCHE PATENTSCHRIFT

(11) **EP 3 512 759 B1**
(45) Veröffentlichungstag und Bekanntmachung des Hinweises auf die Patenterteilung: **21.10.2020**
(21) Anmeldenummer: 17784527.8
(22) Anmeldetag: 08.09.2017
(51) Int. Cl.: B62D 21/14, B62D 21/20, B62D 33/00, B62D 63/00, B62D 21/04, B62D 23/00, B62D 25/20

(54) **ALS LASTKRAFTWAGEN AUSGEBILDETES EINSATZFAHRZEUG**
EMERGENCY VEHICLE DESIGNED AS A TRUCK
VÉHICULE D'UTILITÉ GÉNÉRALE SE PRÉSENTANT SOUS LA FORME D'UN CAMION

(30) Priorität: 13.09.2016 AT 508112016
(43) Veröffentlichungstag der Anmeldung: 24.07.2019
(73) Patentinhaber: Rosenbauer International AG, 4060 Leonding (AT)
(72) Erfinder: PENZ, Edmund, 4020 Linz (AT); RONACHER, Alexander, 4063 Hörsching (AT); ZAUNER, Stefan, 4113 St. Martin i.M. (AT)
(74) Vertreter: Burger, Hannes
(86) Internationale Anmeldenummer: PCT/AT2017/060217
(87) Internationale Veröffentlichungsnummer: WO 2018/049442

(56) Entgegenhaltungen:
- EP-A1- 1 488 986
- EP-A1- 3 012 175
- WO-A1-01/94141
- DE-A1-102010 020 313
- DE-A1-102010 032 072
- DE-A1-102012 106 451
- FR-A1- 2 960 506
- US-A- 2 488 978
- US-A- 3 279 816

## Beschreibung

Die Erfindung betrifft ein als Lastkraftwagen ausgebildetes Einsatzfahrzeug, insbesondere ein Feuerwehrfahrzeug.

Die DE 10 2010 032 072 A1 beschreibt eine Bodentragstruktur eines als Personenwagen ausgebildeten Kraftfahrzeugs. Die Bodentragstruktur umfasst einen in Fahrzeugmitte befindlichen und sich in Fahrzeuglängsrichtung erstreckenden Mitteltunnel, welcher aus einem geschlossenen Hohlprofil besteht und als Behälter zur geschützten Aufnahme von Traktionsbatterien dient. Beidseits des Mitteltunnels sind jeweils ein Tunnellängsträger, ein Bodenblech und außenseitig ein Schweller angeordnet. In der Ebene der Bodentragstruktur und in Längsrichtung des Mitteltunnels sind jeweils tunnellängsträgerseitig Flansche an das Hohlprofil angeformt. Der Mitteltunnel ist durch Einführen von der Kraftfahrzeugunterseite aus in den Bereich zwischen den Tunnellängsträgern mit den Tunnellängsträgern mittels der Flansche verbindbar. Die tragende Bodenstruktur ist dabei jeweils von den Tunnellängsträgern, den Bodenblechen und den außenseitigen Schwellern gebildet. Der als Hohlprofil ausgebildete Mitteltunnel dient nur zur geschützten Aufnahme von Traktionsbatterien und ist in Richtung seiner Längserstreckung beidseitig mit den tragenden Längsträgern verbindbar und damit an diesen gehalten. Zum Wechsel der Traktionsbatterien kann der Mitteltunnel mitsamt den in diesem aufgenommenen Traktionsbatterien abgenommen und entfernt werden.

Es beschreibt auch die FR 2 960 506 A1 ein als Personenwagen ausgebildetes Fahrzeug. Das Fahrzeug umfasst einen tragenden Rahmen aus einem mittig zwischen den Radpaaren angeordneten Träger, an dem ein vorderes Modul, ein Bodenmodul und ein Heckmodul angebracht sind. Auf diesem bodenseitig befindlichen tragenden Rahmen ist der Dachaufbau mitsamt den rundum befindlichen Fenstern aufgesetzt.

Aus der DE 10 2010 020 313 A1 ist eine Tragstruktur einer Fahrzeugkarosserie für einen Personenkraftwagen bekannt geworden. Die Tragstruktur umfasst zumindest einen Mitteltunnel und eine Rückwandeinheit, welche unter Ausbilden mindestens eines ersten Lastpfades zumindest mit dem Mitteltunnel verbunden ist. Die Rückwandeinheit weist eine Stützeinheit auf, welche zum Ausbilden eines zweiten Lastpfades mit dem Mitteltunnel der Tragstruktur verbunden ist. Die Rückwandeinheit ist zusätzlich zumindest mit einem Sitzquerträger und/oder einer B-Säule und/oder einer Dachstruktureinheit der Tragstruktur verbunden. Durch die zusätzliche Stützeinheit zwischen der Rückwandeinheit und dem Mitteltunnel wird der zweite Lastpfad zur Erhöhung der Steifigkeit der Tragstruktur geschaffen, über welche eine verbesserte Einleitung von auftretenden Belastungen in die Tragstruktur und eine gleichmäßigere Verteilung dieser Belastungen in der Tragstruktur erfolgen kann. Auftretende Belastungen sind daher in beide Lastpfade der Tragstruktur einleitbar. Insbesondere bei einer Beanspruchung des Mitteltunnels auf Torsion, erfolgt eine Weiterleitung der entstehenden Spannungen aus dem Mitteltunnel über die Stützeinheit in die Rückwandeinheit. Hieraus resultiert eine Reduktion der Torsions-Lasten im Mitteltunnel. Über die Stützeinheit können in baulich einfacher und kostengünstiger Weise auftretende Belastungen definiert abgebaut und/oder an die Rückwandeinheit weitergeleitet werden, um so die Steifigkeit der Fahrzeugkarosserie zu verbessern. Die zusätzliche Stützeinheit erhöht die Steifigkeit der Karosseriestruktur zwischen der Fahrgastzelle und dem Hinterwagen, so dass die Fahrzeuginsassen im Falle eines Heckaufpralls besser geschützt sind.

Es beschreibt auch die EP 3 012 175 A1 lediglich die Ausbildung eines Fahrzeugs als Personenkraftwagen in einer Monocoque-Bauweise. An einem aus einem thermoplastischen Material geformten unteren Körper wird ein oberer Körper befestigt. Der obere Körper ist aus einem transparenten, thermoplastischen Kunststoff gebildet. Der untere Körper ist plattenförmig ausgebildet und umfasst einer seitlich umlaufenden und von der Platte aufragenden Flanschabschnitt sowie eine mittig verlaufend angeordnete Versteifungsrippe. Der untere plattenförmige Körper trägt den darauf angeordneten und an diesem befestigten oberen Körper, welcher aus mehreren oberen Körperteilen gebildet sein kann.

Aus der US 3,279,816 A ist ein tragend ausgebildetes Bodenchassis eines Motorfahrzeugs bekannt geworden. Das Bodenchassis umfasst eine plattenförmig ausgebildete Struktur mit frontseitig angeordneten Auslegern sowie heckseitig angeordneten Flanschplatten. In Richtung der Längserstreckung der plattenförmig ausgebildeten Struktur ist in Fahrzeugmitte ein zentrales spannungstragendes Element in Tunnelform angeordnet. Das tunnelförmige Element ist mit den frontseitig angeordneten Auslegern sowie den heckseitig angeordneten Flanschplatten fest verbunden.

Es beschreibt auch die US 2,488,978 A einen Rahmen für einen als Kabrio ausgebildeten Personenkraftwagen. Auf einer Bodenplatte ist ein zentral angeordneter Träger mit einem U-förmigen Querschnitt befestigt. Umfänglich um die Bodenplatte sind Seitenwände, eine Rückwandeinheit sowie eine Fronteinheit daran befestigt.

Die EP 1 488 986 A1 beschreibt ein als Personenwagen ausgebildetes Kraftfahrzeug mit einer Verbindungsanordnung im Dachbereich. Die Verbindungsanordnung ist dabei zwischen einem Verstärkungsrahmen für ein Sonderdach und der Kraftfahrzeugkarosserie vorgesehen, welche sowohl bei 2-türigen als auch bei 4-türigen Personenwagen eingesetzt werden kann.

Aus der DE 10 2012 106 451 A1 ist ein Dachaufbau für ein Fahrerhaus eines Nutzfahrzeugs bekannt geworden. Dabei werden für unterschiedliche Dachmodule Gleichteile verwendet, indem Rollprofile für Dachlängs- und Dachquerträger mit unterschiedlicher Länge und bei Bedarf mit unterschiedlichen Flanschen ausgebildet sind. Somit kann der Dachaufbau im Wesentlichen auf drei unterschiedliche Profilarten reduziert werden, nämlich auf ein Längsträgerprofil, auf ein Querträgerprofil und auf ein Säulenprofil.

Die WO 01/94141 A1 beschreibt ein Moduldach eines als Personenwagen ausgebildeten Kraftfahrzeugs. Die Dachkonstruktion der Rohkarosserie umfasst einen vorderen und einen hinteren Querholm sowie einen rechten und einen linken Seitenholm, wobei das Moduldach zumindest zwei Dachmodulelemente aufweist, die unmittelbar an der Dachkonstruktion befestigt sind. Die Dachmodulelemente erstrecken sich bevorzugt über die gesamte Breite der Dachkonstruktion und sind an den sich gegenüberliegenden Seitenholmen insbesondere lösbar befestigt.

Im Fahrzeugbau wurde bei Lastkraftwagen unter dem Begriff Kastenwagen jener Aufbau verstanden, bei welchem die Karosserie des kastenförmigen Aufbaus eine bauliche Einheit mit dem Fahrerhaus bzw. der Fahrerkabine bildete. Der gesamte kastenförmige Aufbau wurde auf einem Zwischenrahmen aufgebaut, wobei der Zwischenrahmen des kastenförmigen Aufbaus auf einem Fahrzeugtragrahmen montiert und von diesem getragen wurde. In letzter Zeit wurde die kastenförmige Bauform bei Lastkraftwagen von einem sogenannten Kofferaufbau abgelöst. Am Fahrzeugtragrahmen wurde dann das Fahrerhaus bzw. die Fahrerkabine kippbar gelagert. Dadurch konnte keine durchgehende feste Verbindung mit dem Kasten ausgebildet werden, da ein Kippen des Fahrerhauses mitsamt dem fest verbundenen Kasten nicht möglich wäre. Der Fahrzeugrahmen umfasst einen zentralen Mittelrahmen oder Längsrahmen, an welchem die jeweiligen Radpaare, die Antriebskomponenten, der Kraftstofftank und andere Komponenten gehalten sind. Auf dem Mittelrahmen oder Längsrahmen des Fahrzeugrahmens wurde entweder der gesamte kastenförmige Aufbau oder das Fahrerhaus bzw. die Fahrerkabine und der eigene Kofferaufbau jeweils als selbsttragender Aufbau unter Zwischenschaltung eines zusätzlichen Tragrahmens abgestützt. Nachteilig ist bei diesen Fahrzeugaufbauten, dass auf dem Fahrzeugrahmen ein eigener tragender kastenförmiger Aufbau oder das Fahrerhaus und der selbsttragende Kofferaufbau vorgesehen waren.

Weiters ist auch noch eine Rahmenbauart bei Fahrzeugen bekannt, bei denen der Fahrzeugrahmen durch einen sogenannten Zentralrohrrahmen gebildet wurde. Der Zentralrohrrahmen ist als tragendes, mittiges Konstruktionselement ausgebildet, welches die weiteren, meist nicht konstruktiv belasteten Fahrzeugelemente aufnimmt. Damit bildet der Zentralrohrrahmen die tragende Struktur unter einer nicht tragenden Karosserie.

Aufgabe der vorliegenden Erfindung war es, die Nachteile des Standes der Technik zu überwinden und ein Einsatzfahrzeug zur Verfügung zu stellen, bei welchem die Fahrzeugkarosserie eine zusammengehörige Baueinheit bildet und diese einen kompakten Gesamtaufbau aufweist. Weiters soll auch noch eine gewichtssparendere Baueinheit ausgebildet werden.

Diese Aufgabe wird durch ein Einsatzfahrzeug gemäß den Ansprüchen gelöst.

Das erfindungsgemäße Einsatzfahrzeug ist als Lastkraftwagen ausgebildet und dient insbesondere als Feuerwehrfahrzeug dem Feuerwehreinsatz oder zur Bergung und/oder Rettung von Personen sowie Gegenständen. Das Einsatzfahrzeug weist eine Frontseite und eine in Fahrzeuglängsrichtung davon distanzierte Heckseite auf und umfasst:
- eine Fahrzeugkarosserie mit einer Bodenbaugruppe, einer Dachbaugruppe und mit einer linken Längswand und einer rechten Längswand, wobei die Längswände zwischen der Bodenbaugruppe und der Dachbaugruppe angeordnet sind,
- einen zentralen Längsträger, welcher Längsträger in Fahrzeuglängsrichtung erstreckend angeordnet ist, wobei
- die Bodenbaugruppe eine Bodenstruktur umfasst und die Bodenstruktur unmittelbar mit dem zentralen Längsträger fest verbunden ist, und wobei
- der zentrale Längsträger einen integralen Bestandteil der Bodenbaugruppe der Fahrzeugkarosserie bildet,
- mindestens ein Vorderradpaar und mindestens ein Hinterradpaar, wobei die zumindest beiden Radpaare am zentralen Längsträger gehalten sind;
- eine Antriebseinheit, welche Antriebseinheit mit zumindest einem der Radpaare in Antriebsverbindung steht, und dass
- die Bodenbaugruppe einen Untergurt, insbesondere einen Zuggurt, der Fahrzeugkarosserie bildet,
- die Dachbaugruppe einen Obergurt, insbesondere einen Druckgurt, der Fahrzeugkarosserie bildet,
- die Fahrzeugkarosserie mehrere Querwände umfasst,
- zumindest einzelne der Querwände unmittelbar mit dem zentralen Längsträger der Bodenbaugruppe fest verbunden sind,
- zumindest einzelne der Querwände mit zumindest einer der Längswände der Fahrzeugkarosserie fest verbunden sind,
- die Fahrzeugkarosserie eine Fahrerkabine umfasst, welche Fahrerkabine eine integrale Baueinheit der Fahrzeugkarosserie bildet,
- der zentrale Längsträger unmittelbar mit der Fahrzeugkarosserie fest verbunden ist, und dass
- die Fahrzeugkarosserie mitsamt dem darin integrierten Längsträger von der Frontseite bis zur Heckseite eine bauliche, durchgängig zusammenhaltende Struktur ausbildet.

Der dadurch erzielte Vorteil liegt darin, dass durch die Integration des zentralen Längsträgers mit dem Fahrzeugaufbau, nämlich der Fahrzeugkarosserie, eine kompakte selbsttragende Gesamtstruktur geschaffen werden kann und so auf zusätzliche Zwischenrahmen bei der Bildung des Fahrzeugaufbaus verzichtet werden kann. Da der zentrale Längsträger bodenseitig angeordnet ist, stellt dieser durch seine Integration in die Bodenbaugruppe gemeinsam mit dieser im Zusammenwirken mit den weiteren Karosserieteilen die selbsttragende Gesamtstruktur dar. Weiters kann durch die Integration des zentralen Längsträgers und den Wegfall von ansonsten benötigten Zwischenrahmen einerseits Gewicht eingespart werden und andererseits ein zusätzlicher Aufnahmeraum innerhalb des Fahrzeugaufbaus geschaffen werden. So kann trotz des nicht mehr benötigten Zwischenrahmens doch eine stabile Gesamttragstruktur gebildet werden.

Die Bodenbaugruppe bildet einen Untergurt, insbesondere einen Zuggurt, der Fahrzeugkarosserie. Durch die Integration des zentralen Längsträgers in die Bodenbaugruppe kann so für das als Lastkraftwagen ausgebildete Fahrzeug eine tragfähige, ausreichend massive Basis geschaffen werden.

Weiters umfasst die Bodenbaugruppe eine Bodenstruktur, wobei die Bodenstruktur unmittelbar mit dem zentralen Längsträger fest verbunden ist. Durch das Vorsehen der Bodenstruktur kann so im Bodenbereich der Fahrzeugkarosserie eine abgeschlossene Baueinheit geschaffen werden, welche zusätzlich noch eine ausreichende Steifigkeit und Festigkeit bis hin zu den Längs- bzw. Seitenwänden bildet.

Die Fahrzeugkarosserie umfasst weiters mehrere Querwände. Durch das Vorsehen mehrerer Querwände innerhalb der Fahrzeugkarosserie kann eine zusätzliche Versteifung der gesamten Fahrzeugkarosserie erzielt werden. Weiters kann damit aber auch eine ausreichende Distanzierung der Dachbaugruppe von der Bodenbaugruppe je nach gewählter Bauhöhe der Querwände erzielt werden. Weiters können die Querwände auch noch dazu dienen, den innerhalb der Fahrzeugkarosserie befindlichen Aufnahmeraum in einzelne Abteile zu unterteilen.

Weiters sind zumindest einzelne der Querwände unmittelbar mit dem zentralen Längsträger der Bodenbaugruppe fest verbunden. Damit kann eine ausreichend stabile und feste Fahrzeugkarosserie geschaffen werden.

Es sind weiters einzelne der Querwände mit zumindest einer der Längswände der Fahrzeugkarosserie fest verbunden. Durch das Vorsehen zumindest einer der Längswände und deren Verbindung mit der oder den Querwänden kann so ein noch stabilerer Gesamtaufbau der Fahrzeugkarosserie erzielt werden.

Es bildet die Dachbaugruppe einen Obergurt, insbesondere einen Druckgurt, der Fahrzeugkarosserie. Durch das Miteinbeziehen der gesamten Dachbaugruppe in die Ausbildung bzw. den Aufbau der Fahrzeugkarosserie kann diese ebenfalls als tragende Baueinheit dienen. Damit kann gemeinsam mit der Bodenbaugruppe und der Distanzierung der beiden Baugruppen durch die Querwände sowie Längswände voneinander eine in sich selbst tragende Gesamtstruktur je nach Anforderung geschaffen werden.

Weiters umfasst die Fahrzeugkarosserie eine Fahrerkabine, wobei die Fahrerkabine eine integrale Baueinheit der Fahrzeugkarosserie bildet. Dabei ist die Fahrerkabine von einem Teilabschnitt der Bodenbaugruppe, einem Teilabschnitt der Dachbaugruppe, von Teilabschnitten der Längswände sowie je nach Größe und Aufnahmekapazität von zumindest zwei Querwänden umgrenzt. So kann eine durchgängige, zusammengehörige Baueinheit des Einsatzfahrzeugs geschaffen werden. Bedingt durch die Integration der gesamten Fahrerkabine in den Fahrzeugaufbau der Fahrzeugkarosserie kann damit eine noch bessere zusammengehörige selbsttragende Struktur geschaffen werden.

Weiters kann es vorteilhaft sein, wenn der Längsträger als Hohlprofilkörper mit einem mehreckigen Querschnitt ausgebildet ist. Durch die Ausbildung des Längsträgers als Hohlprofilkörper kann so eine hohe Eigensteifigkeit desselben erzielt werden. Darüber hinaus kann so aber auch innerhalb des Längsträgers ein Aufnahmeraum, beispielsweise für Antriebskomponenten, Treibstoff, Löschmittel, Löschwasser oder dergleichen geschaffen werden. Bevorzugt wird ein rechteckiger Querschnitt gewählt, welcher in konstruktiver Weise mit in die Bodenbaugruppe integriert wird und auch die unterschiedlichsten Befestigungsmöglichkeiten aufweisen kann.

Eine weitere Ausbildung sieht vor, dass in der Bodenstruktur ein Aufnahmekanal angeordnet oder ausgebildet ist, welcher Aufnahmekanal sich in Fahrzeuglängsrichtung erstreckt und dass der zentrale Längsträger zumindest bereichsweise im Aufnahmekanal aufgenommen ist. Durch das Vorsehen bzw. Ausbilden eines Aufnahmekanals in der Bodenstruktur kann damit eine noch bessere platzsparende Aufnahme des zentralen Längsträgers innerhalb der Bodenbaugruppe erzielt werden.

Eine andere Ausführungsform zeichnet sich dadurch aus, dass der Aufnahmekanal ausgehend von einer Bodenunterseite der Bodenstruktur in Richtung auf die Dachbaugruppe vertieft in der Bodenstruktur angeordnet ist und/oder dass der Aufnahmekanal auf die von der Dachbaugruppe abgewendete Seite vertieft in der Bodenstruktur angeordnet ist. Durch die Ausbildung des Aufnahmekanals an der Bodenstruktur kann noch eine zusätzliche Versteifung derselben im Zusammenwirken mit dem zentralen Längsträger erzielt werden.

Weiters kann es vorteilhaft sein, wenn eine der Querwände die Frontseite der Fahrzeugkarosserie ausbildet und einen Halterahmen sowie zumindest eine im Halterahmen gehaltene Sichtscheibe aufweist. Durch die Integration der Querwände als tragende Bestandteile der Fahrzeugkarosserie kann so auch die Frontseite des Fahrzeuges als tragender Bestandteil mit ausgebildet werden. Bei ausreichender, stabiler Befestigung der Sichtscheibe am Halterahmen kann so auch die vorderste Querwand eine tragende Funktion bei der Bildung der Fahrzeugkarosserie ausüben.

Eine andere alternative Ausführungsform zeichnet sich dadurch aus, dass zumindest einzelne der Querwände in einer in senkrechter Richtung bezüglich der Fahrzeuglängsrichtung ausgerichteten Querebene angeordnet sind. Dadurch können Verwindungen der Fahrzeugkarosserie während des Fahrbetriebes minimiert werden, welche ausgehend von der Bodenbaugruppe hin auf die gesamte Fahrzeugkarosserie übertragen werden.

Eine weitere bevorzugte Ausführungsform ist dadurch gekennzeichnet, dass die Dachbaugruppe zumindest einen Dachträger sowie zumindest ein mit dem zumindest einen Dachträger verbundenes Dachelement aufweist. Damit kann ein stabiler und tragender Aufbau der Dachbaugruppe geschaffen werden.

Weiters kann es vorteilhaft sein, wenn die Dachbaugruppe einen linken Dachträger, einen rechten Dachträger und zumindest einen weiteren Dachträger umfasst, welcher zumindest eine weitere Dachträger in senkrechter Richtung bezüglich der Fahrzeuglängsrichtung zwischen dem linken Dachträger und dem rechten Dachträger angeordnet ist und der zumindest eine weitere Dachträger ebenfalls mit dem Dachelement verbunden ist. Durch das Vorsehen mehrerer Dachträger kann so auch im Dachbereich des Fahrzeugs nicht nur eine Versteifung desselben sondern auch zumindest ein Aufnahmeraum für mitzunehmende bzw. mitzuführende Ausrüstungsgegenstände geschaffen werden.

Eine andere Ausfuhrungsform zeichnet sich dadurch aus, dass zwei weitere Dachträger vorgesehen sind, und die beiden weiteren Dachträger in senkrechter Richtung bezüglich der Fahrzeuglängsrichtung voneinander distanziert angeordnet sind. Damit kann die Eigensteifigkeit der gesamten Dachbaugruppe noch zusätzlich verbessert werden.

Eine weitere mögliche Ausführungsform hat die Merkmale, dass zumindest einzelne der Dachträger fest mit zumindest einer der Querwände verbunden sind. Damit kann die gesamte Tragfähigkeit des Fahrzeugaufbaus verbessert und erhöht werden.

Eine weitere Ausbildung sieht vor, dass die Fahrzeugkarosserie weiters eine zumindest abschnittsweise angeordnete Außenverkleidung umfasst. Durch das Vorsehen einer zusätzlichen Außenverkleidung kann so je nach Bedarf ein äußerer Abschluss der Fahrzeugkarosserie geschaffen werden.

Schließlich ist eine weitere bevorzugte Ausführungsform dadurch gekennzeichnet, dass die Fahrzeugkarosserie mitsamt dem Längsträger eine selbsttragende Struktur ausbildet. Damit kann ein Aufbaukonzept geschaffen werden, welches die Möglichkeit bietet, auf individuelle Kundenwünsche rascher reagieren und besser darauf eingehen zu können.

Zum besseren Verständnis der Erfindung wird diese anhand der nachfolgenden Figuren näher erläutert.

Es zeigen jeweils in stark vereinfachter, schematischer Darstellung:
- Fig. 1: ein als Einsatzfahrzeug ausgebildeter Lastkraftwagen, in Seitenansicht;
- Fig. 2: einen vereinfachten Strukturaufbau eines Einsatzfahrzeugs, in Seitenansicht;
- Fig. 3: einen anderen vereinfachten Strukturaufbau eines Einsatzfahrzeugs, in Seitenansicht;
- Fig. 4: einen weiteren möglichen Strukturaufbau eines Einsatzfahrzeugs, in Seitenansicht und vereinfachter Darstellung;
- Fig. 5: einen anderen vereinfachten Strukturaufbau eines Einsatzfahrzeugs, in Seitenansicht;
- Fig. 6: einen Querschnitt durch einen möglichen Strukturaufbau eines Einsatzfahrzeugs, in vereinfachter Darstellung;
- Fig. 7: einen Querschnitt eines anderen möglichen Strukturaufbaus eines Einsatzfahrzeugs, in vereinfachter Darstellung;
- Fig. 8: einen Querschnitt eines weiteren möglichen Strukturaufbaus eines Einsatzfahrzeugs, in vereinfachter Darstellung;
- Fig. 9: den möglichen Strukturaufbau des Einsatzfahrzeugs nach Fig. 5, im Querschnitt und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

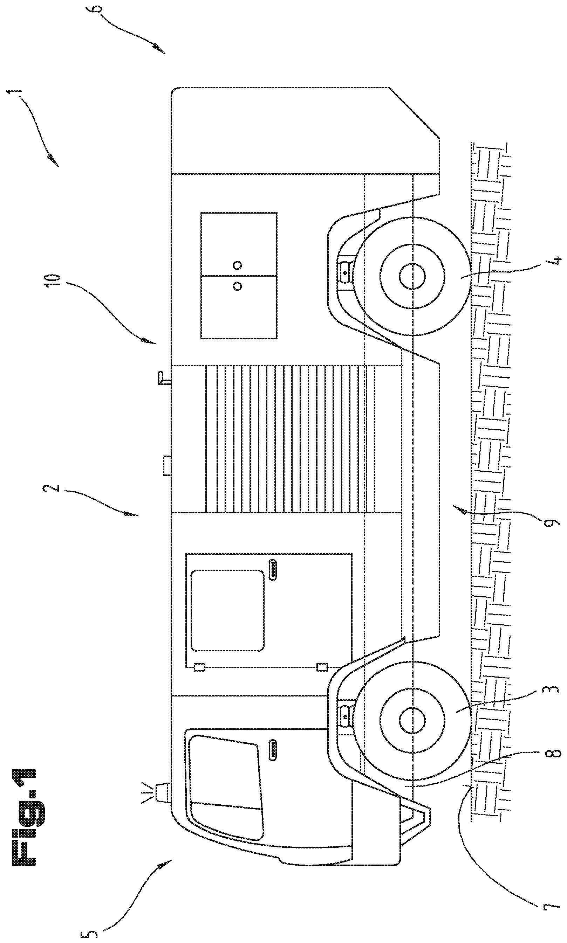

In der Fig. 1 ist ein Einsatzfahrzeug 1 in einer vereinfachten Seitenansicht gezeigt. Das Einsatzfahrzeug 1 kann zu unterschiedlichsten Einsatzzwecken dienen, insbesondere als Feuerlöschfahrzeug, Kommunalfahrzeug oder auch als Transportfahrzeug. Weiters ist das Einsatzfahrzeug 1 im vorliegenden Ausführungsbeispiel als sogenannter Lastkraftwagen ausgebildet und umfasst eine Fahrzeugkarosserie 2, mindesten ein Vorderradpaar 3 und mindestens ein Hinterradpaar 4. Es wäre auch möglich, anstatt von Einzelrädern auch Zwillingsräder einzusetzen.

In dem hier gezeigten Ausführungsbeispiel ist eine mögliche Form eines Einsatzfahrzeugs als Feuerwehrfahrzeug dargestellt. In der Fahrzeugkarosserie 2 können die unterschiedlichsten Aufnahmefächer und/oder Aufnahmeboxen vorgesehen sein, um so die für den Einsatz notwendigen Ausrüstungsgegenstände, Werkzeuge und vieles mehr geordnet mitführen zu können. Dazu können die Aufnahmefächer und/oder Aufnahmeboxen mittels Türen, Rollläden oder anderen Verschlusselementen für den Transport verschlossen und bei Bedarf zugänglich gemacht werden.

Auf die Darstellung einer Antriebseinheit oder sonstigen Einheiten bzw. Bauteilkomponenten wurde der besseren Übersichtlichkeit halber verzichtet.

Das Einsatzfahrzeug 1 weist eine Frontseite 5 und eine in Fahrzeuglängsrichtung davon distanzierte Heckseite 6 auf, wodurch eine Baulänge bzw. Fahrzeuglänge definiert ist. Weiters ist hier noch gezeigt, dass das Einsatzfahrzeug 1 auf einer bevorzugt horizontal ausgerichteten Aufstandsfläche 7 aufgestellt bzw. darauf abgestützt ist.

Der grundsätzliche Aufbau des Einsatzfahrzeugs 1 ist von der Fahrzeugkarosserie 2 sowie einem zentralen Längsträger 8 gebildet. Es wird hier jegliche Struktur verstanden, welche unter anderem dazu ausgebildet ist, die einzelnen Radpaare, die Antriebselemente und viele andere Komponenten zu tragen. Diese Gesamtstruktur kann auch als Fahrzeugaufbau bezeichnet werden.

Der zentrale Längsträger 8 bildet gemeinsam mit der Fahrzeugkarosserie 2 eine selbsttragende Struktur aus. Die Fahrzeugkarosserie 2 umfasst ihrerseits eine Bodenbaugruppe 9, eine Dachbaugruppe 10 sowie eine linke Längswand 11 und/oder eine rechte Längswand 12. Die Betrachtungsrichtung ist dabei in Richtung der normalen, üblichen Fahrtrichtung gewählt. Bei diesem Ausführungsbeispiel ist sowohl eine linke Längswand 11 als auch eine rechte Längswand 12 gezeigt und beschrieben, wobei es möglich ist, nur eine der beiden Längswände 11, 12 vorzusehen. Jede der beiden Längswände 11, 12 ist zwischen der Bodenbaugruppe 9 und der Dachbaugruppe 10 angeordnet. Der zentrale Längsträger 8 ist in Fahrtrichtung gesehen, bevorzugt mittig bezüglich des Einsatzfahrzeugs 1, insbesondere von dessen Radpaaren 3, 4, sowie in Fahrzeuglängsrichtung erstreckend angeordnet. Die zumindest beiden Radpaare 3, 4 sind bevorzugt am zentralen Längsträger 8 gehalten, wobei deren Befestigung und Antrieb aus Übersichtlichkeitsgründen nicht näher dargestellt sind. Eine nicht näher dargestellte und bezeichnete Antriebseinheit steht mit zumindest einem der Radpaare 3, 4 in Antriebsverbindung.

Der zentrale Längsträger 8 kann auch als Kernrohr bezeichnet werden und ist als Hohlprofilkörper ausgebildet, welcher bevorzugt einen mehreckigen Querschnitt aufweist. Je nach Belastung des Längsträgers 8 kann als Werkstoff z.B. Aluminium, die verschiedensten AL-Legierungen und/oder aber auch Stahl mit den unterschiedlichsten Beigaben und daraus gebildete Legierungen gewählt werden. Es wäre aber auch noch möglich, Verbundwerkstoffe, Laminate, Compositwerkstoffe oder dgl. einzusetzen. So kann der Längsträger 8 aus Profilen und/oder gekanteten Blechen zu einem zusammengehörigen einzigen Bauteil zusammengesetzt werden. Alle zuvor beschriebenen Werkstoffe oder aber auch mögliche Werkstoffkombinationen daraus, können nicht nur bei der Bildung des Längsträgers 8, sondern auch noch zur Bildung der Fahrzeugkarosserie 2, insbesondere der nachfolgend noch beschriebenen Bauteilkomponenten, eingesetzt werden. Dies können z.B. die Bodenbaugruppe 9, die Dachbaugruppe 10, die Seitenwände bzw. die Längswände 11, 12, eine Bodenstruktur 13, eine Außenverkleidung 17 sowie Querwände 14 sein. Bei der Wahl von Verbundwerkstoffen können diese je nach dem Herstellungsverfahren zu einer gemeinsamen Baueinheit aus zumindest einer Längswand 11, 12, den Querwänden 14, der Dachbaugruppe 10 sowie gegebenenfalls der Bodenbaugruppe 9 zusammengeführt sein.

Weiters ist der zentrale Längsträger 8 unmittelbar mit der Fahrzeugkarosserie 2 fest verbunden, insbesondere verschraubt, vernietet und/oder teilweise stoffschlüssig verbunden. Der zentrale Längsträger 8 bildet weiters einen integralen Bestandteil der Bodenbaugruppe 9 der Fahrzeugkarosserie 2. Dies bedeutet, dass die Fahrzeugkarosserie 2, nicht wie üblich auf einem tragenden Zwischenrahmen aufgebaut ist und der tragende Zwischenrahmen auf dem zentrale Längsträger 8 abgestützt ist, sondern auf den Zwischenrahmen gänzlich verzichtet wird. Damit bildet der zentrale Längsträger 8 gemeinsam mit der Bodenbaugruppe 9 einen Untergurt, insbesondere einen Zuggurt, der Fahrzeugkarosserie 2.

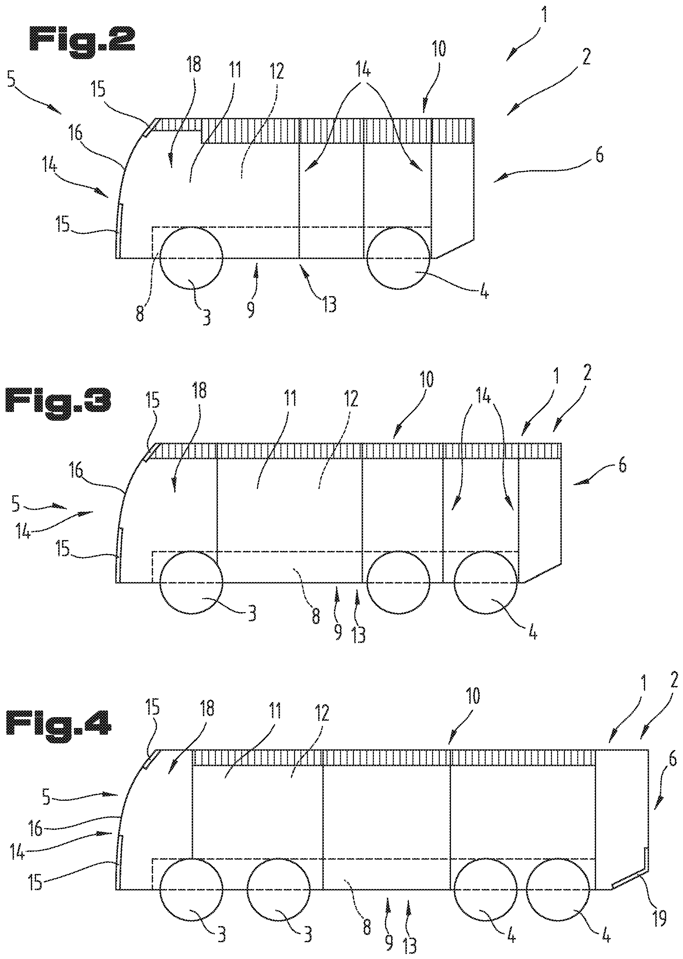

In den nachfolgenden Fig. 2 bis 9 sind mögliche, unterschiedliche Anordnungen von einzelnen Bauteilkomponenten der selbsttragenden Struktur zur Bildung des Einsatzfahrzeugs 1 sowie unterschiedliche Ausbildungen desselben gezeigt. Der grundsätzliche Aufbau der selbsttragenden Struktur ist in den Fig. 3 bis 9 nur stark stilisiert dargestellt.

So ist in der Fig. 2 die selbsttragende Struktur zur Bildung des Einsatzfahrzeugs 1 mit der Fahrzeugkarosserie 2 und dem Längsträger 8 gezeigt. Die Bodenbaugruppe 9 der Fahrzeugkarosserie 2 kann zusätzlich zum Längsträger 8 auch noch eine Bodenstruktur 13 umfassen, welche sich ausgehend vom Längsträger 8 jeweils hin zu den beiden Längswänden 11, 12 erstreckt. Im unteren Eckbereich bzw. Längsrandbereich kann die Bodenstruktur 13 jeweils mit den Längswänden 11, 12 fest verbunden sein. Zur Bildung der stabilen, selbsttragenden Struktur ist die Bodenstruktur 13 unmittelbar mit dem zentralen Längsträger 8 fest verbunden.

Die Fahrzeugkarosserie 2 umfasst zumindest eine Querwand 14, jedoch zumeist mehrere Querwände 14, welche als lastabtragende Querspanten ausgebildet sind. Jede der Querwände 14 ist in Querrichtung, insbesondere in senkrechter Richtung, bezüglich der Längserstreckung oder der Fahrzeuglängsrichtung der Fahrzeugkarosserie 2 ausgerichtet. Es sind je nach Ausbildung und Anordnung die Querwände 14 mit zumindest einer der Längswände 11, 12 ebenfalls zu einer tragenden Baueinheit verbunden. Sind beide Längswände 11, 12 vorgesehen, erfolgt bevorzugt auch eine feste Verbindung der Querwände 14 mit beiden Längswänden 11, 12.

Weiters ist hier noch gezeigt, dass auch jene Querwand 14, welche die Frontseite 5 der Fahrzeugkarosserie 2 bildet, einen Halterahmen 15 sowie zumindest eine im Halterahmen 15 gehaltene Sichtscheibe 16 aufweist.

Um auch im Bereich der Bodenbaugruppe 9 eine ausreichende Eigensteifigkeit zu erreichen, sind zumindest einzelne der Querwände 14 unmittelbar mit dem zentralen Längsträger 8 der Bodenbaugruppe 9 fest verbunden. Weiters kann auch noch eine zumindest bereichsweise feste Verbindung der Querwände 14 mit der Bodenstruktur 13 erfolgen.

Die Dachbaugruppe 10 bildet einen Obergurt, insbesondere einen Druckgurt, der Fahrzeugkarosserie 2.

Zusätzlich kann die Fahrzeugkarosserie 2 weiters eine zumindest abschnittsweise angeordnete Außenverkleidung 17 umfassen. Die Außenverkleidung 17 kann zusätzlich zu zumindest einer der beiden Längswände 11, 12 vorgesehen bzw. angeordnet sein oder zumindest abschnittsweise selbst zumindest eine der beiden Längswände 11, 12 bilden und damit zur Erhöhung der Eigensteifigkeit beitragen. Bevorzugt dienen jedoch die beiden Längswände 11, 12 als tragende Bauteile oder sind als diese ausgebildet. Die Außenverkleidung 17 kann auch die gesamte Fahrzeugkarosserie 2 außen abdeckend angeordnet sein. Zur Außenverkleidung 17 werden auch Rollläden, Türen, Schiebetüren oder andere Verschlussteile gezählt.

Bei den derzeit üblichen Lastkraftwagen ist eine eigene Fahrerkabine vorgesehen, welche kippbar bzw. klappbar am Fahrzeugrahmen bzw. dem Fahrgestell gelagert und gehalten ist. Bei der in diesem Ausführungsbeispiel gezeigten Fahrzeugkarosserie 2 ist noch vorgesehen, dass diese als integrale Baueinheit auch noch eine Fahrerkabine 18 mit umfasst. Die Fahrerkabine 18 ist damit ebenfalls fester und fixer Bestandteil der selbsttragenden Struktur des Einsatzfahrzeugs 1. So bildet die Fahrzeugkarosserie 2 mitsamt dem darin integrierten Längsträger 8 von der Frontseite 5 bis zur Heckseite 6 eine bauliche, durchgängig zusammenhaltende Struktur aus.

Der zentrale Längsträger 8 erstreckt sich ausgehend vom Bereich unterhalb der Fahrerkabine 18 bis zumindest über das Hinterradpaar 4 hinausragend durchgängig in Fahrzeuglängsrichtung.

Die Bauhöhe sowie die Fahrzeugbreite des Einsatzfahrzeugs 1 kann nach den jeweiligen gesetzlichen Vorschriften gewählt werden.

Die Anordnung der einzelnen Querwände 14 kann nach Bedarf und dem benötigten Platzbedarf sowie dem individuellen Einsatzzweck frei gewählt werden. So kann nicht nur die Frontseite 5 der Fahrerkabine 18 von einer eigenen Querwand 14 gebildet sein, sondern auch noch jene Querwand 14, welche zur Bildung der Heckseite 6 dient.

Bei dem in der Fig. 2 gezeigten Ausführungsbeispiel ist der heckseitige Bereich der Fahrzeugkarosserie 2 zur Aufnahme einer nicht näher dargestellten Ladeanordnung mit einer bevorzugt in vertikaler Richtung höhenverstellbaren Ladeplattform ausgebildet. Damit ist die tragende Querwand 14 von der Heckseite 6 distanziert in Richtung auf das Frontende bzw. die Frontseite 5 angeordnet. Am Längsträger 8 sind ein Vorderradpaar 3 und nur ein Hinterradpaar 4 gehalten. Die Längserstreckung des Längsträgers 8 endet unmittelbar hinterhalb des Hinterradpaares 4, um so einen heckseitigen Freiraum innerhalb der Fahrzeugkarosserie 2 zu schaffen.

In der Fig. 3 ist eine weitere mögliche Ausbildung des Einsatzfahrzeugs 1 mit seiner Fahrzeugkarosserie 2 und dem integralen Längsträger 8 gezeigt. Der grundsätzliche selbsttragende Strukturaufbau ist auch wiederum realisiert. Deshalb wird, um unnötige Wiederholungen zu vermeiden, auf die detaillierte Beschreibung in den vorangegangenen Fig. 1 und 2 hingewiesen bzw. Bezug genommen. Es werden wiederum für gleiche Teile gleiche Bezugszeichen bzw. Bauteilbezeichnungen wie in den vorangegangenen Fig. 1 und 2 verwendet werden. Gegebenenfalls kann diese Ausbildung eine für sich eigenständige Ausführungsform ausbilden.

Die selbsttragende Struktur zur Bildung des Einsatzfahrzeugs 1 umfasst auch hier die Fahrzeugkarosserie 2 und den Längsträger 8. Weiters umfasst die Fahrzeugkarosserie 2 noch die zuvor beschriebene Bodenbaugruppe 9, die Dachbaugruppe 10, die beiden Längswände 11, 12 sowie bevorzugt mehrere Querwände 14. All diese Bauteile bzw. Bauteilgruppen sind zu der selbsttragenden Struktur miteinander fest und/oder starr verbunden.

Weiters ist hier noch zu ersehen, dass das Einsatzfahrzeug 1 gegenüber dem in der Fig. 2 gezeigten Einsatzfahrzeug 1 eine dazu größere oder längere Fahrzeuglänge aufweist. Dazu können zwei Hinterradpaare 4 vorgesehen sein.

Das Heckende der Fahrzeugkarosserie 2 ist bodenseitig mit einer von der Dachbaugruppe 10 hin zur Bodenbaugruppe 9 abfallenden Abschrägung versehen. Dies kann als geböschtes Heck bezeichnet werden. Der Längsträger 8 erstreckt sich unmittelbar bis hin zum abgeschrägten Heck bzw. der Heckseite 6. Die Fahrerkabine 18 ist ebenfalls integraler, einstückiger Bestandteil der Fahrzeugkarosserie 2.

Das in der Fig. 4 dargestellte Einsatzfahrzeug 1 weist den gleichen grundsätzlichen Aufbau mit der selbsttragenden Struktur auf, wie die in den Fig. 1 bis 3 beschriebenen Einsatzfahrzeuge 1.

Der Unterschied zu diesen Ausbildungen besteht lediglich in der längeren Fahrzeuglänge. Weiters sind am Längsträger 8 zwei Vorderradpaare 3 und zwei Hinterradpaare 4 befestigt.

Im bodenseitigen Bereich der Bodenbaugruppe 9 ist ein Endquerträger 19 vorgesehen, welcher den tragenden heckseitigen Abschluss der Fahrzeugkarosserie 2 bildet. Der Endquerträger 19 kann sowohl mit dem Längsträger 8 und/oder der Bodenstruktur 13 sowie mit den beiden Längswänden 11, 12 fest zu der selbsttragenden Baueinheit bzw. Struktur verbunden sein.

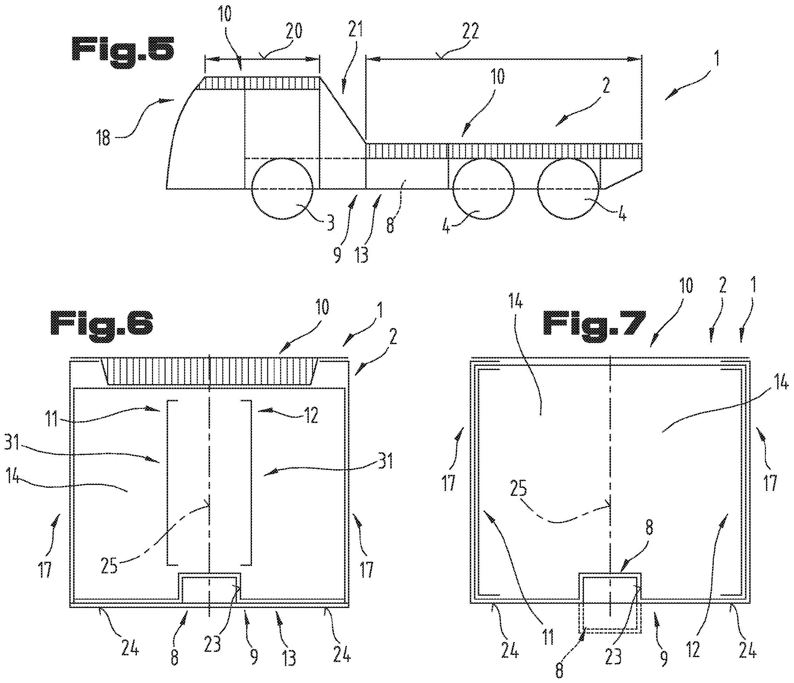

Die Fig. 5 zeigt eine weitere mögliche und gegebenenfalls für sich eigenständige Ausführungsform des Einsatzfahrzeugs 1, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Dieses Einsatzfahrzeug 1 kann z.B. zum Aufbau einer Drehleiter, eines Hubsteigers oder eines anderen Aufstiegshilfsmittels dienen. Dazu ist hier vorgesehen, dass die Fahrzeugkarosserie 2 im Bereich der Frontseite 5 zumindest die Fahrerkabine 18 sowie gegebenenfalls noch einen Mannschaftsraum und/oder einen Aufnahmeraum für Ausrüstungsgegenstände umfasst.

In diesem Abschnitt weist die Fahrzeugkarosserie 2 eine entsprechend dem vorgesehenen zusätzlichen Aufbau angepasste Bauhöhe auf.

Im Gegensatz zu den in den Fig. 1 bis 4 gezeigten Einsatzfahrzeugen 1 ist hier die Fahrerkabine 18 auch noch tiefer gesetzt angeordnet, als in den zuvor beschriebenen Ausführungsbeispielen. Um dies zu ermöglichen, endet der Längsträger 8 an der der Heckseite 6 zugewendeten und bevorzugt durch eine Querwand 14 gebildete Kabinenrückwand der Fahrerkabine 18.

Es sind auch hier die Bodenbaugruppe 9 sowie die Dachbaugruppe 10 vorgesehen. Die Dachbaugruppe 10 weist jedoch in einer Seitenansicht betrachtet einen von der Frontseite 5 hin zur Heckseite 6 abgestuft ausgebildeten Längsverlauf auf. Unter einer abgestuften Ausbildung wird verstanden, dass die Dachbaugruppe 10 in deren Längserstreckung in zumindest zwei zueinander unterschiedlichen Ebenen verlaufend angeordnet ist. So kann ein zueinander unterschiedlicher Abstand zwischen der zumeist in einer Ebene verlaufend angeordneten Bodenbaugruppe 9 und einzelnen Längsabschnitten der Dachbaugruppe 10 realisiert werden. Es wäre auch noch möglich, mehr als zwei Ebenen bei der Dachbaugruppe 10 vorzusehen.

Ein erster Längsabschnitt der Dachbaugruppe 10 im Bereich der Fahrerkabine 18 sowie ein möglicherweise daran anschließender Karosseriebereich ist in etwa parallel bezüglich der Bodenbaugruppe 9, insbesondere des Längsträgers 8 verlaufend angeordnet. Dieser Längsbereich bzw. Längsabschnitt der Dachbaugruppe 10 erstreckt sich in etwa von einem Drittel bis hin zur Hälfte der gesamten Fahrzeuglänge und bildet einen ersten Dachbereich 20. Anschließend an den ersten Dachbereich 20 ist ein in Richtung auf die Bodenbaugruppe 9 abfallend ausgebildeter Zwischenbereich 21 angeordnet bzw. vorgesehen. Bei der restlichen Fahrzeuglänge sind die Querwände 14 mit einer geringeren Bauhöhe ausgebildet als im Bereich der Fahrerkabine 18 bzw. des ersten Dachbereichs 20 der Dachbaugruppe 10. Damit wird erreicht, dass im Bereich bzw. dem Längsabschnitt eines zweiten Dachbereichs 22 die Dachbaugruppe 10 unmittelbar oberhalb der Bodenbaugruppe 9 angeordnet ist. Die selbsttragende Struktur bzw. der selbsttragende Strukturaufbau ist auch in diesem Längsabschnitt des zweiten Dachbereichs 22 beibehalten.

In der Fig. 6 ist ein möglicher Querschnitt durch die selbsttragende Struktur des Einsatzfahrzeuges 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf detaillierte Beschreibung in den vorangegangenen Fig. 1 bis 5 hingewiesen bzw. Bezug genommen.

Des Weiteren wurde auf die Darstellung der Radpaare 3, 4 verzichtet und lediglich der grundsätzliche, selbsttragende Aufbau bzw. die selbsttragende Struktur besser und übersichtlicher dargestellt.

Die hier gezeigte Bodenbaugruppe 9 umfasst die Bodenstruktur 13 sowie den unmittelbar mit dieser verbundenen zentralen Längsträger 8. In der Bodenstruktur 13 ist ein Aufnahmekanal 23 angeordnet oder ausgebildet, wobei sich der Aufnahmekanal 23 in Fahrzeuglängsrichtung erstreckt. Weiters ist hier noch vorgesehen, dass der zentrale Längsträger 8 zumindest bereichsweise im Aufnahmekanal 23 aufgenommen ist. Es ist auch noch zu ersehen, dass der Aufnahmekanal 23 ausgehend von einer Bodenunterseite 24 der Bodenstruktur 13 in Richtung auf die Dachbaugruppe 10 vertieft in der Bodenstruktur 13 angeordnet ist.

Die hier gezeigte Querwand 14 erstreckt sich im vorliegenden Ausführungsbeispiel bis zu der außenseitig an der Fahrzeugkarosserie 2 angeordneten Außenverkleidung 17.

Die zuvor beschriebene linke Längswand 11 sowie die rechte Längswand 12 weisen hier im Querschnitt gesehen einen C- bzw. U-förmigen Querschnitt auf. Die beiden Längswände 11, 12 sind von der äußeren seitlichen Begrenzung der Fahrzeugkarosserie 2, im vorliegenden Ausführungsbeispiel von den Außenverkleidungen 17, in Richtung auf eine im Zentrum des Längsträgers 8 verlaufende Mittellängsebene 25 hin zu dieser versetzt angeordnet. Weiters sind die beiden Längswände 11, 12 im Nahbereich der Dachbaugruppe 10 unterhalb dieser angeordnet. Auch hier ist wiederum eine feste Verbindung der beiden Längswände 11, 12 mit der oder den Querwänden 14 vorgesehen.

Die Dachbaugruppe 10 kann beispielsweise durch einen sogenannten Sandwichträger bzw. eine Sandwichplatte gebildet sein, welche den gesamten Dachbereich der Fahrzeugkarosserie 2 ausbildet. Die feste Verbindung zwischen den Querwänden 14, der Bodenbaugruppe 9, der Dachbaugruppe 10 sowie der beiden Längswände 11, 12 kann analog erfolgen, wie dies bereits zuvor beschrieben ist. Wesentlich ist die an den jeweiligen Kontaktstellen bzw. Stoßstellen feste und/oder starre Verbindung zwischen den jeweiligen Bauteilen, um die selbsttragende Struktur ausbilden zu können. Je nach Werkstoffwahl kann die gegenseitige Verbindung zwischen den miteinander zu verbindenden Bauteilen der Fahrzeugkarosserie 2 und/oder des Längsträgers 8 auch mittels eines Laminiervorgangs erfolgen.

Bei dem in der Fig. 7 dargestellten Ausführungsbeispiel des Querschnitts der Fahrzeugkarosserie 2 sowie des Längsträgers 8 ist ebenfalls die Bodenbaugruppe 9, die Dachbaugruppe 10 und die beiden Längswände 11, 12 zu ersehen. Es ist auch wiederum der zuvor beschriebene Aufnahmekanal 23 zur Aufnahme des zentralen Längsträgers 8 in der Bodenstruktur 13 vorgesehen.

Die beiden Längswände 11, 12 sind im Bereich der äußeren Umgrenzung der Fahrzeugkarosserie 2 angeordnet und erstrecken sich bevorzugt durchgängig zwischen der Bodenbaugruppe 9 und der Dachbaugruppe 10. Eine entsprechende feste Verbindung mit diesen beiden Baugruppen 9, 10 kann ebenfalls vorgesehen sein. Gleichfalls kann auch wiederum eine feste, stabile Verbindung der beiden Längswände 11, 12 mit dem oder den Querwänden 14 erfolgen.

Aufgrund der stabilen Ausführung der beiden Längswände 11, 12 kann bei diesem hier gezeigten Ausführungsbeispiel die Dachbaugruppe 10 mit einer geringeren tragenden Funktion ausgebildet werden, als dies zuvor in der Fig. 6 gezeigt worden ist.

Bei all den bisher beschriebenen Ausführungsbeispielen ist der Längsträger 8 in Richtung auf die Dachbaugruppe 10 vertieft in der Bodenstruktur 13 der Bodenbaugruppe 9 aufgenommen. In strichlierten Linien ist noch angedeutet, dass der Längsträger 8 auch in einem in der Bodenstruktur 13 vorgesehenen Aufnahmekanal 23 angeordnet oder aufgenommen sein kann, welcher Aufnahmekanal 23 auf die von der Dachbaugruppe 10 abgewendete Seite vertieft in der Bodenstruktur 13 ausgebildet ist. Damit ragt der Aufnahmekanal 23 in Richtung auf die Aufstandsfläche 7 über die Bodenunterseite 24 der Bodenstruktur 13 vor.

Bei den beiden in den Fig. 6 und 7 dargestellten Querschnitten der Fahrzeugkarosserie 2 weist jeweils die Dachbaugruppe 10 eine in etwa oder überwiegende ebenflächige Ausbildung auf.

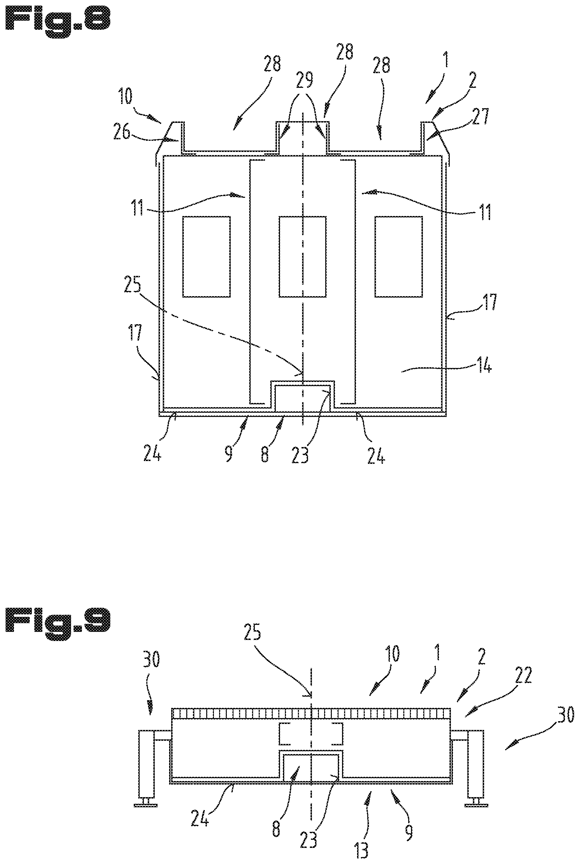

In der Fig. 8 ist eine weitere und gegebenenfalls für sich eigenständige Ausführungsform der Fahrzeugkarosserie 2 sowie des Längsträgers 8 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Auch hier umfasst die Fahrzeugkarosserie 2 die Bodenbaugruppe 9, die Dachbaugruppe 10, die beiden Längswände 11, 12 sowie die Querwände 14. Die hier dargestellte Querwand 14 kann Ausnehmungen bzw. Durchbrüche aufweisen, um so den innerhalb der Fahrzeugkarosserie 2 befindlichen Aufnahmeraum zu vergrößern oder aber auch Gewicht einzusparen.

Im Gegensatz zu der zuvor ebenflächig an der Außenseite ausgebildeten Dachbaugruppe 10 ist hier noch gezeigt, dass die Dachbaugruppe 10 zum Beispiel zur Aufnahme von im Bereich des Daches mitzuführenden Ausrüstungsgegenständen und Gerätschaften, wie beispielsweise Leitern, Stangen, Rohren oder Transportkisten, einen in Querrichtung zur Fahrzeuglängsrichtung gestuften bzw. abgesetzten Aufbau aufweisen kann.

So kann die Dachbaugruppe 10 beispielsweise einen linken Dachträger 26 und einen rechten Dachträger 27 aufweisen. Zusätzlich kann die Dachbaugruppe 10 auch noch zumindest ein den linken und den rechten Dachträger 26, 27 verbindendes Dachelement 28 umfassen. Sollen mehrere vertieft in der Dachbaugruppe 10 angeordnete Aufnahmebereiche geschaffen werden, ist es möglich, dass die Dachbaugruppe 10 zumindest einen weiteren Dachträger 29 umfasst. Bevorzugt sind jedoch zwei weitere Dachträger 29 vorgesehen, wobei die beiden weiteren Dachträger 29 in senkrechter Richtung bezüglich der Fahrzeuglängsrichtung voneinander distanziert angeordnet sein können. Weiters ist der zumindest eine weitere Dachträger 29 in senkrechter Richtung bezüglich der Fahrzeuglängsrichtung zwischen dem linken Dachträger 26 und dem rechten Dachträger 27 angeordnet. Es wäre noch möglich, dass der zumindest eine weitere Dachträger 29 ebenfalls mit dem Dachelement 28 verbunden ist, insbesondere fest oder fix verbunden ist.

Zur Bildung einer stabilen, festen Ausbildung der Gesamttragstruktur ist es noch vorteilhaft, wenn die Dachbaugruppe 10, insbesondere deren Dachträger 26, 27, 29, fest mit zumindest einer der Querwände 14 verbunden ist. Damit kann die Dachbaugruppe 10 als Druckgurt mit in die Bildung der selbsttragenden Fahrzeugkarosserie 2 eingebunden werden.

Die Fig. 9 zeigt einen möglichen Querschnitt der Fahrzeugkarosserie 2 sowie des Längsträgers 8 für jenes Einsatzfahrzeug 1, wie dieses in der Fig. 5 zuvor gezeigt und beschrieben worden ist. Der zentrale Längsträger 8 ist in dem Aufnahmekanal 23 der Bodenstruktur 13 zur Bildung der zusammengehörigen Bodenbaugruppe 9 aufgenommen. Weiters sind Querwände 14 zwischen der Bodenbaugruppe 9 und der Dachbaugruppe 10 vorgesehen bzw. angeordnet. Aufgrund der geringen vertikalen Bauhöhe der Querwände 14 im zweiten abgesetzten Dachbereich 22 weisen auch die beiden Längswände 11, 12 nur eine geringe Bauhöhe auf. Zur Verstärkung des Längsträgers 8 sind die beiden Längswände 11, 12 unmittelbar oberhalb ohne wesentliche seitliche Versetzung bezüglich des Längsträgers 8 angeordnet. Die Dachbaugruppe 10 kann wiederum beispielsweise durch einen Sandwichaufbau realisiert sein, um so einen ausreichend festen Druckgurt der Fahrzeugkarosserie ausbilden zu können.

Weiters ist hier noch seitlich der Fahrzeugkarosserie 2 dargestellt, dass zur Entlastung der Radpaare 3, 4 eine zusätzliche Stützvorrichtung 30, wie diese hinlänglich bekannt ist, vorzusehen. Damit kann die Standfläche des Einsatzfahrzeuges 1 vergrößert und darüber hinaus noch die Standsicherheit verbessert werden.

Allgemein sei noch hingewiesen, dass durch die hier geschaffene Möglichkeit zur variablen Anordnung der Querwände 14 und zumindest einer der beiden Längswände 11, 12 in Verbindung mit der Dachbaugruppe 10 ein hoher Freiheitsgrad zur Unterteilung des von der Fahrzeugkarosserie 2 umgrenzten Aufnahmeraums in unterschiedlichste Teilräume 31 geschaffen wird. In der Fig. 6 sind mehrere der Teilräume 31 eingetragen. In den einzelnen voneinander getrennten Teilräumen 31 kann so ein vordefinierter Platz für die Aufnahme von Ausrüstungsgegenständen, Aggregaten, Kisten, Containern oder aber nur ein Stauraum bereitgestellt werden. Je nach Anordnung kann zumindest ein Teilraum 31 auch einen Tank für ein Löschmittel und/oder ein Zusatzlöschmittel bilden. Es wäre auch noch möglich, dass das Einsatzfahrzeug 1 zumindest einen innerhalb des von der Fahrzeugkarosserie 2 umgrenzten Aufnahmeraums einen eigenständigen Tank, insbesondere einen Löschmitteltank, umfasst, wobei dann der eigenständige Tank fest mit dem zentralen Längsträger 8 und/oder der Bodenbaugruppe 9 verbunden ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Einsatzfahrzeugs 1, insbesondere dessen selbsttragende Struktur, Bauteile bzw. Element teilweise unmaßstäblich und/oder vergrößert und/oder verkleinert dargestellt wurden.

**Bezugszeichenaufstellung**

| | | | |
|---|---|---|---|
| 1 | Einsatzfahrzeug | 31 | Teilraum |
| 2 | Fahrzeugkarosserie | | |
| 3 | Vorderradpaar | | |
| 4 | Hinterradpaar | | |
| 5 | Frontseite | | |
| 6 | Heckseite | | |
| 7 | Aufstandsfläche | | |
| 8 | Längsträger | | |
| 9 | Bodenbaugruppe | | |
| 10 | Dachbaugruppe | | |
| 11 | linke Längswand | | |
| 12 | rechte Längswand | | |
| 13 | Bodenstruktur | | |
| 14 | Querwand | | |
| 15 | Halterahmen | | |
| 16 | Sichtscheibe | | |
| 17 | Außenverkleidung | | |
| 18 | Fahrerkabine | | |
| 19 | Endquerträger | | |
| 20 | erster Dachbereich | | |
| 21 | Zwischenbereich | | |
| 22 | zweiter Dachbereich | | |
| 23 | Aufnahmekanal | | |
| 24 | Bodenunterseite | | |
| 25 | Mittellängsebene | | |
| 26 | linker Dachträger | | |
| 27 | rechter Dachträger | | |
| 28 | Dachelement | | |
| 29 | Dachträger | | |
| 30 | Stützvorrichtung | | |

## Patentansprüche

1. Einsatzfahrzeug (1), insbesondere Feuerwehrfahrzeug, welches Einsatzfahrzeug (1) als Lastkraftwagen ausgebildet ist, das Einsatzfahrzeug (1) weist eine Frontseite (5) und eine in Fahrzeuglängsrichtung davon distanzierte Heckseite (6) auf und umfasst:
- eine Fahrzeugkarosserie (2) mit einer Bodenbaugruppe (9), einer Dachbaugruppe (10) und mit einer linken Längswand (11) und einer rechten Längswand (12), wobei die Längswände (11, 12) zwischen der Bodenbaugruppe (9) und der Dachbaugruppe (10) angeordnet sind;
- einen zentralen Längsträger (8), welcher Längsträger (8) in Fahrzeuglängsrichtung erstreckend angeordnet ist, wobei
- die Bodenbaugruppe (9) eine Bodenstruktur (13) umfasst und die Bodenstruktur (13) unmittelbar mit dem zentralen Längsträger (8) fest verbunden ist, und wobei
- der zentrale Längsträger (8) einen integralen Bestandteil der Bodenbaugruppe (9) der Fahrzeugkarosserie (2) bildet,
- mindestens ein Vorderradpaar (3) und mindestens ein Hinterradpaar (4), wobei die zumindest beiden Radpaare (3, 4) am zentralen Längsträger (8) gehalten sind;
**dadurch gekennzeichnet,**
- **dass** die Bodenbaugruppe (9) einen Untergurt, insbesondere einen Zuggurt, der Fahrzeugkarosserie (2) bildet,
- **dass** die Dachbaugruppe (10) einen Obergurt, insbesondere einen Druckgurt, der Fahrzeugkarosserie (2) bildet,
- **dass** die Fahrzeugkarosserie (2) mehrere Querwände (14) umfasst,
- **dass** zumindest einzelne der Querwände (14) unmittelbar mit dem zentralen Längsträger (8) der Bodenbaugruppe (9) fest verbunden sind,
- **dass** zumindest einzelne der Querwände (14) mit zumindest einer der Längswände (11, 12) der Fahrzeugkarosserie (2) fest verbunden sind,
- **dass** die Fahrzeugkarosserie (2) eine Fahrerkabine (18) umfasst, welche Fahrerkabine (18) eine integrale Baueinheit der Fahrzeugkarosserie (2) bildet,
- **dass** der zentrale Längsträger (8) unmittelbar mit der Fahrzeugkarosserie (2) fest verbunden ist, und
- **dass** die Fahrzeugkarosserie (2) mitsamt dem darin integrierten Längsträger (8) von der Frontseite (5) bis zur Heckseite (6) eine bauliche, durchgängig zusammenhaltende Struktur ausbildet.

2. Einsatzfahrzeug (1) nach Anspruch 1, **dadurch gekennzeichnet, dass** der Längsträger (8) als Hohlprofilkörper mit einem mehreckigen Querschnitt ausgebildet ist.

3. Einsatzfahrzeug (1) nach Anspruch 1, **dadurch gekennzeichnet, dass** in der Bodenstruktur (13) ein Aufnahmekanal (23) angeordnet oder ausgebildet ist, welcher Aufnahmekanal (23) sich in Fahrzeuglängsrichtung erstreckt und dass der zentrale Längsträger (8) zumindest bereichsweise im Aufnahmekanal (23) aufgenommen ist.

4. Einsatzfahrzeug (1) nach Anspruch 3, **dadurch gekennzeichnet, dass** der Aufnahmekanal (23) ausgehend von einer Bodenunterseite (24) der Bodenstruktur (13) in Richtung auf die Dachbaugruppe (10) vertieft in der Bodenstruktur (13) angeordnet ist und/oder dass der Aufnahmekanal (23) auf die von der Dachbaugruppe (10) abgewendete Seite vertieft in der Bodenstruktur (13) angeordnet ist.

5. Einsatzfahrzeug (1) nach Anspruch 1, **dadurch gekennzeichnet, dass** eine der Querwände (14) die Frontseite (5) der Fahrzeugkarosserie (2) ausbildet und einen Halterahmen (15) sowie zumindest eine im Halterahmen (15) gehaltene Sichtscheibe (16) aufweist.

6. Einsatzfahrzeug (1) nach Anspruch 1 oder 5, **dadurch gekennzeichnet, dass** zumindest einzelne der Querwände (14) in einer in senkrechter Richtung bezüglich der Fahrzeuglängsrichtung ausgerichteten Querebene angeordnet sind.

7. Einsatzfahrzeug (1) nach einem der vorhergehenden Ansprüche, **dadurch gekennzeichnet, dass** die Dachbaugruppe (10) zumindest einen Dachträger (26, 27) sowie zumindest ein mit dem zumindest einen Dachträger (26, 27) verbundenes Dachelement (28) aufweist.

8. Einsatzfahrzeug (1) nach Anspruch 7, **dadurch gekennzeichnet, dass** die Dachbaugruppe (10) einen linken Dachträger (26), einen rechten Dachträger (27) und zumindest einen weiteren Dachträger (29) umfasst, welcher zumindest eine weitere Dachträger (29) in senkrechter Richtung bezüglich der Fahrzeuglängsrichtung zwischen dem linken Dachträger (26) und dem rechten Dachträger (27) angeordnet ist und der zumindest eine weitere Dachträger (29) ebenfalls mit dem Dachelement (28) verbunden ist.

9. Einsatzfahrzeug (1) nach Anspruch 8, **dadurch gekennzeichnet, dass** zwei weitere Dachträger (29) vorgesehen sind, und die beiden weiteren Dachträger (29) in senkrechter Richtung bezüglich der Fahrzeuglängsrichtung voneinander distanziert angeordnet sind.

10. Einsatzfahrzeug (1) nach einem der Ansprüche 7 bis 9, **dadurch gekennzeichnet, dass** zumindest einzelne der Dachträger (26, 27, 29) fest mit zumindest einer der Querwände (14) verbunden sind.

11. Einsatzfahrzeug (1) nach einem der vorhergehenden Ansprüche, **dadurch gekennzeichnet, dass** die Fahrzeugkarosserie (2) weiters eine zumindest abschnittsweise angeordnete Außenverkleidung (17) umfasst.

12. Einsatzfahrzeug (1) nach einem der vorhergehenden Ansprüche, **dadurch gekennzeichnet, dass** die Fahrzeugkarosserie (2) mitsamt dem Längsträger (8) eine selbsttragende Struktur ausbildet.

## Claims

1. An emergency vehicle (1), in particular fire fighting vehicle, which emergency vehicle (1) is designed as a truck, the emergency vehicle (1) having a front side (5) and a rear side (6) spaced therefrom in the longitudinal direction of the vehicle and comprising:
- a vehicle body (2) with an floor assembly (9), a roof assembly (10) and with a left longitudinal wall (11) and a right longitudinal wall (12), wherein the longitudinal walls (11, 12) are arranged between the floor assembly (9) and the roof assembly (10);
- a central longitudinal beam (8), which longitudinal beam (8) is arranged in a manner extending in vehicle longitudinal direction, wherein
- the floor assembly (9) comprises a floor structure (13) and the floor structure (13) is securely joined directly to the central longitudinal beam (8), and
wherein
- the central longitudinal beam (8) forms an integral component of the floor assembly (9) of the vehicle body (2),
- at least one front-wheel pair (3) and at least one rear-wheel pair (4), wherein the at least two wheel pairs (3, 4) are held on the central longitudinal beam (8);
**characterized in**
- **that** the floor assembly (9) forms a bottom chord, especially a tension belt, of the vehicle body (2),
- **that** the roof assembly (10) forms an upper chord, in particular a pressure belt, of the vehicle body (2),
- **that** the vehicle body (2) comprises multiple transverse walls (14),
- **that** at least individual ones of the transverse walls (14) are securely joined directly to the central longitudinal beam (8) of the floor assembly (9),
- **that** at least individual ones of the transverse walls (14) are securely joined to at least one of the longitudinal walls (11, 12) of the vehicle body (2),
- **that** the vehicle body (2) comprises a driver's cabin (18), which driver's cabin (18) forms an integral structural unit (2) of the vehicle body,
- **that** the central longitudinal beam (8) is securely joined directly to the vehicle body (2), and
- **that** the vehicle body (2) together with the longitudinal beam (8) integrated therein forms a structural, continuously cohesive unit from the front side (5) to the rear side (6).

2. The emergency vehicle (1) according to claim 1, **characterized in that** the longitudinal beam (8) is designed as a hollow-profile member having a polygonal cross section.

3. The emergency vehicle (1) according to claim 1, **characterized in that** a receiving channel (23) is arranged or formed in the floor structure (13) which receiving channel (23) extends in vehicle longitudinal direction, and **in that** the central longitudinal beam (8) is received at least in some regions in the receiving channel (23).

4. The emergency vehicle (1) according to claim 3, **characterized in that** the receiving channel (23) is arranged starting from an floor underside (24) of the floor structure (13) in the direction toward the roof assembly (10) and recessed in the floor structure (13) and/or **in that** the receiving channel (23) is arranged on the side facing away from the roof assembly (10) and recessed in the floor structure (13).

5. The emergency vehicle (1) according to claim 1, **characterized in that** one of the transverse walls (14) forms the front side (5) of the vehicle body (2) and has at least one retaining frame (15) and at least one window (16) held in the retaining frame (15).

6. The emergency vehicle (1) according to claim 1 or 5, **characterized in that** at least individual ones of the transverse walls (14) are arranged in a transverse plane aligned in perpendicular direction with respect to the vehicle longitudinal direction.

7. The emergency vehicle (1) according to one of the preceding claims, **characterized in that** the roof assembly (10) has at least one roof beam (26, 27) and at least one roof element (28) joined to the at least one roof beam (26, 27).

8. The emergency vehicle (1) according to claim 7, **characterized in that** the roof assembly (10) comprises a left roof beam (26), a right roof beam (27) and at least one further roof beam (29), which at least one further roof beam (29) is arranged between the left roof beam (26) and the right roof beam (27) in perpendicular direction with respect to the vehicle longitudinal direction and the at least one further roof beam (29) is likewise joined to the roof element (28).

9. The emergency vehicle (1) according to claim 8, **characterized in that** two further roof beams (29) are provided, and the two further roof beams (29) are arranged spaced apart from one another in perpendicular direction with respect to the vehicle longitudinal direction.

10. The emergency vehicle (1) according to one of claims 7 to 9, **characterized in that** at least individual ones of the roof beams (26, 27, 29) are securely joined to at least one of the transverse walls (14).

11. The emergency vehicle (1), according to one of the preceding claims, **characterized in that** the vehicle body (2) further comprises an outer paneling (17) arranged at least in sections.

12. The emergency vehicle (1) according to one of the preceding claims, **characterized in that** the vehicle body (2), together with the longitudinal beam (8) forms a self-supporting structure.

## Revendications

1. Véhicule d'intervention (1), plus particulièrement véhicule de sapeurs-pompiers, ce véhicule d'intervention (1) étant conçu comme un poids-lourd, le véhicule d'intervention (1) comprenant un côté avant (5) et un côté arrière (6), distant de celui-ci dans la direction longitudinale du véhicule et comprenant :
- une carrosserie de véhicule (2) avec un sous-ensemble de plancher (9), un sous-ensemble de toit (10) et avec une paroi longitudinale gauche (11) et une paroi longitudinale droite (12), dans laquelle les parois longitudinales (11, 12) sont disposées entre le sous-ensemble de plancher (9) et le sous-ensemble de toit (10) ;
- un longeron central (8), ce longeron (8) étant disposé de façon à s'étendre dans la direction longitudinale du véhicule, dans lequel
- le sous-ensemble de plancher (9) comprend une structure de plancher (13) et la structure de plancher (13) est reliée fermement avec le longeron central (8) et dans lequel
- le longeron central (8) fait partie intégrante du sous-ensemble de plancher (9) de la carrosserie du véhicule (2),
- au moins une paire de roues avant (3) et au moins une paire de roues arrière (4), dans lesquelles les au moins deux paires de roues (3, 4) sont maintenues sur le longeron central (8) ;
**caractérisé en ce que**
- le sous-ensemble de plancher (9) constitue une membrure inférieure, plus particulièrement une membrure de traction, de la carrosserie du véhicule (2),
- le sous-ensemble de toit (10) constitue une membrure supérieure, plus particulièrement une membrure de pression, de la carrosserie du véhicule (2),
- la carrosserie du véhicule (2) comprend plusieurs parois transversales (14),
- au moins certaines des parois transversales (14) sont reliées fermement directement avec le longeron central (8) du sous-ensemble de plancher (9),
- au moins certaines des parois transversales (14) sont reliées fermement avec au moins une des parois transversales (11, 12) de la carrosserie du véhicule (2),
- la carrosserie du véhicule (2) comprend une cabine de conducteur (18), cette cabine de conducteur (18) constituant un module intégral de la carrosserie du véhicule (2),
- le longeron central (8) est relié fermement directement avec la carrosserie du véhicule (2) et
- la carrosserie du véhicule (2) constitue, conjointement avec le longeron (8) qui y est intégré, du côté avant (5) jusqu'au côté arrière (6), une structure cohérente continue.

2. Véhicule d'intervention (1) selon la revendication 1, **caractérisé en ce que** le longeron (8) est conçu comme un corps profilé creux avec une section transversale polygonale.

3. Véhicule d'intervention (1) selon la revendication 1, **caractérisé en ce que**, dans la structure de plancher (13), un canal de logement (23) est disposé ou réalisé, ce canal de logement (23) s'étendant dans la direction longitudinale du véhicule et **en ce que** le longeron central (8) est logé, au moins à certains endroits, dans le canal de logement (23).

4. Véhicule d'intervention (1) selon la revendication 3, **caractérisé en ce que** le canal de logement (23) est disposé de manière approfondie à partir d'un côté inférieur du plancher (24) de la structure de plancher (13) en direction du sous-ensemble de toit (10) dans la structure du plancher (13) et/ou **en ce que** le canal de logement (23) est disposé de manière approfondie sur le côté opposé au sous-ensemble de toit (10) dans la structure de plancher (13).

5. Véhicule d'intervention (1) selon la revendication 1, **caractérisé en ce qu'**une des parois transversales (14) forme le côté avant (5) de la carrosserie du véhicule (2) et comprend un cadre de maintien (15) ainsi qu'au moins une vitre (16) maintenue dans le cadre de maintien (15).

6. Véhicule d'intervention (1) selon la revendication 1 ou 5, **caractérisé en ce qu'**au moins certaines des parois transversales (14) sont disposées dans un plan transversal orienté dans la direction perpendiculaire par rapport à la direction longitudinale du véhicule.

7. Véhicule d'intervention (1) selon l'une des revendications précédentes, **caractérisé en ce que** le sous-ensemble de toit (10) comprend au moins un support de toit (26, 27) ainsi qu'au moins un élément de toit (28) relié avec l'au moins un support de toit (26, 27).

8. Véhicule d'intervention (1) selon la revendication 7, **caractérisé en ce que** le sous-ensemble de toit (10) comprend un support de toit gauche (26), un support de toit droit (27) et au moins un support de toit supplémentaire (29), cet au moins un support de toit supplémentaire (29) étant disposé dans la direction perpendiculaire par rapport à la direction longitudinale du véhicule entre le support de toit gauche (26) et le support de toit droit (27) et l'au moins un support de toit supplémentaire (29) étant également relié avec l'élément de toit (28).

9. Véhicule d'intervention (1) selon la revendication 8, **caractérisé en ce que** deux supports de toit supplémentaires (29) sont prévus et les deux supports de toit supplémentaires (29) sont disposés de manière distante entre eux dans la direction perpendiculaire par rapport à la direction longitudinale du véhicule.

10. Véhicule d'intervention (1) selon l'une des revendications 7 à 9, **caractérisé en ce qu'**au moins certains des supports de toit (26, 27, 29) sont reliés fermement avec au moins une des parois transversales (14).

11. Véhicule d'intervention (1) selon l'une des revendications précédentes, **caractérisé en ce que** la carrosserie du véhicule (2) comprend en outre un carénage externe (17) disposé au moins à certains endroits.

12. Véhicule d'intervention (1) selon l'une des revendications précédentes, **caractérisé en ce que** la carrosserie du véhicule (2) constitue, conjointement avec le longeron (8), une structure autoportante.
